# EUROPEAN PATENT SPECIFICATION

(11) **EP 4 006 919 B1**
(45) Date of publication and mention of the grant of the patent: **25.09.2024**
(21) Application number: 20383029.4
(22) Date of filing: 26.11.2020
(51) Int. Cl.: G21B 1/13, G21C 3/62, G21C 21/02

(54) **ENCAPSULATED PEBBLE FUEL**
GEKAPSELTER KUGELBRENNSTOFF
BOULET DE COMBUSTIBLE ENCAPSULÉ

(43) Date of publication of application: 01.06.2022
(73) Proprietor: United Kingdom Atomic Energy Authority, Abingdon, Oxfordshire OX14 3DB (GB)
(72) Inventor: PLAZA, Francisco Jose Calvo, 28049 Madrid (ES); FERNANDEZ, Jorge Fradera, 08940 Cornellà de Llobregat (ES); CIPRIAIN, Sergio Sadaba, 28049 Madrid (ES); HA, Samuel, Abingdon, Oxfordshire OX14 3DB (GB)
(74) Representative: Haseltine Lake Kempner LLP

(56) References cited:
- WO-A1-2011/071575
- US-A- 3 878 041
- US-A- 4 634 567
- US-A1- 2011 286 570

## Description

### FIELD OF THE INVENTION

The disclosure relates to an encapsulated pebble, a method of making the pebble, a breeding blanket module, a fusion reactor comprising the pebble and/or the breeding blanket, and uses thereof.

### BACKGROUND OF THE INVENTION

Fuel pebbles are known in nuclear fusion processes as well as nuclear fission processes. In fission processes, pebbles typically comprise impermeable pyrolytic carbon shells, each containing a high number of fuel particles such as TRISO particles.

Pebble beds have also been proposed for fusion reactors, specifically as part of the breeding blanket. In a fusion reactor, the breeding blanket wraps around the reactor core where the plasma is generated, and provides shielding from the neutrons generated in the plasma by absorbing the neutrons, extracts heat for power generation and breeds tritium, necessary for achieving the self-sufficiency principle of a fusion reactor.

Existing blankets can be divided into two categories: liquid (molten fuel) blankets and solid fuel blankets. Liquid blankets have thermal-hydraulic and material compatibility problems due to corrosion at high temperatures, while solid blankets have problems with, for example, tritium extraction.

US 3,878,041 describes a nuclear fuel for use in gas-cooled reactors comprising a carbon coated kemal of UO₂₋ₓN_{3/4x} where 0 < x ≤ 1. WO 2011/071575 A1 describes a neutron multiplier pebble which includes a beryllium core having at least one of porous beryllium and metallic beryllide, wherein the beryllium core is spherical having a radius of from about 0.1 mm to about 20 mm, and the neutron multiplier pebble includes a coating on the beryllium core. US 4,634,567 A describes fusion targets, particularly the production of multi-shell inertial confinement fusion targets.

### SUMMARY OF THE INVENTION

As noted above, there are limitations with existing blankets for fusion processes. It would thus be valuable to have an improvement aimed at addressing these limitations.

Therefore, according to a first aspect, there is provided an encapsulated pebble, comprising:
a fission fuel core or a fusion fuel core;
a cage encapsulating the fuel core, wherein the cage comprises at least one gas transport channel therethrough and the internal diameter of the cage is larger than the external diameter of the fuel core; and
a ceramic shell contained within the cage and surrounding the fuel core and/or a ceramic insert provided in the at least one gas transport channel, wherein the ceramic shell or the ceramic insert comprises a gas-permeable ceramic.

The cage encapsulating the core provides structural support and protects the core from impact while still allowing gas to leave the pebble.

According to a second aspect, there is provided a method of forming an encapsulated pebble, comprising:
encapsulating a fission fuel core or a fusion fuel core within a cage, wherein the cage comprises at least one gas transport channel therethrough and the internal diameter of the cage is larger than the external diameter of the fuel core, the method comprising forming a gas-permeable ceramic shell around the fission fuel core or the fusion fuel core and encapsulating the formed ceramic shell within the cage, or inserting a gas-permeable ceramic insert into the at least one gas transport channel.

According to a third aspect, there is provided a breeding blanket module for a fusion reactor, comprising:
a plurality of pebble beds connected in series and/or in parallel; and
a plurality of encapsulated pebbles within each pebble bed, wherein at least one encapsulated pebble comprises a fusion fuel core in accordance with the first aspect.

By connecting the plurality of pebble beds in series and/or in parallel, more efficient cooling and tritium extraction processes can be achieved.

According to a fourth aspect, there is provided a method of operating the breeding blanket module of the third aspect, comprising:
providing a flow of coolant gas to the breeding blanket module;
allowing the coolant gas to extract heat and tritium from the breed blanket module providing a warmed gas enriched with tritium;
removing the warmed gas from the breeding blanket module; and
extracting the tritium from the warmed gas.

According to a fifth aspect, there is provided a fusion reactor comprising at least one encapsulated pebble comprising a fusion fuel core in accordance with the first aspect.

Uses of the encapsulated pebble of the first aspect and the breeding blanket module of the third aspect constitute further aspects of the disclosure.

According to the aspects described above, the limitations of existing techniques are addressed. In particular, the functions of cooling, structural support and containment are separated out into the different components of the encapsulated pebble. The breeding blanket module also has a low mass of structural material. There is thus provided an improved encapsulated pebble, breeding blanket and uses thereof.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1A depicts an encapsulated pebble according to an embodiment;
Fig. 1B depicts an encapsulated pebble according to an embodiment;
Fig. 2 depicts encapsulated pebbles packed together in a pebble bed according to an embodiment; and
Fig. 3 depicts a breeding blanket module according to an embodiment.

### DETAILED DESCRIPTION OF EMBODIMENTS

### Encapsulated Pebble

As noted above, there is provided herein an encapsulated pebble comprising a core and a cage encapsulating the core. In some embodiments, the encapsulated pebble may be a fuel pebble, suitable for use in a fission reactor. In some embodiments, the encapsulated pebble may be a breeder pebble, suitable for use in a breeding blanket of a fusion reactor. It will be understood that the terms breeder pebble and fuel pebble may be used interchangeably herein when components similar to both systems are being described.

The cage comprises at least one gas transport channel therethrough, to allow gas to leave the core and prevent an excessive build up of pressure within the core. While the present disclosure is concerned primarily with encapsulated pebbles for use in breeding blankets of nuclear fusion reactors, it is seen that the pebbles may also find use in fission processes, for example in molten salt reactors in which gaseous and volatile fission products such as xenon, krypton and iodine are produced and must be captured and disposed of. As used herein, the term "cage" is to be understood as being a three-dimensional structure in which one or more materials, for example a core and/or a ceramic shell are contained. The cage is structurally resilient enough to not deform in use, thereby protecting its contents from being damaged through impact with other objects.

The encapsulated pebble comprises a fuel core. In some examples, the fuel core may also be referred to herein as a breeding core. In fusion processes, the breeding material generates tritium which is the fuel for the fusion process and so is also referred to herein as a fuel-generating core or fuel core. In some examples, the fuel core comprises a breeding material capable of generating tritium, such as those known in existing fusion processes. Operating temperatures for breeding blankets for fusion processes are typically above 300 °C and so the fuel core may comprise a molten salt that is liquid above about 300 °C. There are many different molten salts that can be used in breeding blankets. Typically, the breeding material comprises a lithium salt, for example Li₂·BeF₄ (FLiBe), as tritium production in fusion reactors is usually achieved by means of the Li⁶(n,α)H³ and Li⁷(n,n',α)H³ reactions. FLiBe is known to have a high tritium breeding rate (TBR) and has a melting point of 459 °C, though other liquid breeders such as PbLi alloys, for example Pb₁₇Li₈₃, or LiF-LiI-LiCl salts are also suitable. It will be understood that the composition of the breeding material, for example a LiF-LiI-LiCl mixture can be tailored to operating requirements.

In some embodiments, the fuel core further comprises a redox controlling material, for example metallic beryllium. In embodiments in which the fuel core comprises a fluoride salt, a redox reaction between generated tritium and fluoride can result in tritium fluoride. Tritium fluoride is as corrosive as hydrogen fluoride and could corrode components of the breeding blanket, including the cage if formed of metal. However, inclusion of a redox controlling material such as metallic beryllium can prevent generation of tritium fluoride so that diatomic (molecular) tritium is formed instead. Other redox controllers such as zirconium could also be used.

The encapsulated pebble comprises a cage encapsulating the fuel core. The cage provides sufficient structural support or rigidity around the fuel core in use and, when present, the ceramic shell, to prevent contact among pebbles to prevent dust generation, withstand the weight of the packed bed and allow deformations due to mechanical loads without impacting on tritium extraction or cooling of the pebbles. In some embodiments, the cage may be spherical or cylindrical. Spherical pebbles are particularly suited to packing into a pebble bed, such as a cylindrical fuel bed as described herein.

The cage comprises at least one gas transport channel therethrough, to allow permeation of tritium and helium from the core through the cage. In this way, efficiency of tritium extraction can be improved, while containing the molten salt in situ and preventing buildup of gas within the pebble. In some embodiments, the cage comprises a plurality of gas transport channels, thus increasing the efficiency of tritium extraction. The gas transport channel may be machined channel, for example produced by laser drilling of the cage to provide holes of about 0.5 µm. In other embodiments, the gas transport channel may be formed by inclusion of pores within the cage. In other embodiments, the cage comprises a wire-like structure, for example comprising a mesh of woven or non-woven fibers. In some examples, the fibers forming the woven or non-woven mesh may be less than 5 mm in diameter, for example less than 3 mm in diameter, for example about 1 mm in diameter. In some examples the mesh may be formed from single stranded fibers, or multi-stranded braided fibers.

In some embodiments, the cage diameter is less than 20 mm, for example less than 15 mm, for example about 10 mm or less. In some embodiments, the cage has a thickness of less than 2 mm, for example less than 1.5 mm, for example about 1 mm or less. In some embodiments, the internal diameter of the cage may be larger than the external diameter of the fuel core. In embodiments in which the encapsulated pebble comprises a ceramic shell surrounding the fuel core, the internal diameter of the cage may be larger than the external diameter of the ceramic shell. Thus, a gap may be provided between the cage and the internal components. By providing a gap between the fuel core and the cage, or between the ceramic shell and the cage, extracted tritium can efficiently permeate from the fuel core and out of the pebble to the pebble bed.

The maximum thermal efficiency of the breeding blanket is determined by the maximum operational temperature of the structural materials. Therefore, the selection of structural materials such as the cage is driven in part by its activation and its performance at high temperatures. Most benefit can be obtained by working in the creep regime, avoiding excessive cyclic thermal stress. Undesirable cyclic loads lead to creep-fatigue interactions and progressive deformation. If the material temperature is reduced too much, then embrittlement radiation effects become dominant. In some embodiments, the cage comprises a metallic cage, for example formed from metallic alloy, for example a steel. The metallic alloy may comprise a reduced activation ferritic martensitic steel, or an austenitic steel or an oxide dispersed steel. Steels used in the nuclear industry are well known. In one embodiment, the cage comprises or is formed from EUROFER 97, a reduced activation ferritic martensitic steel. Other suitable materials include the known steels MHT-9, ODS, F82H and ORNL 9Cr-2WVTa. In other embodiments, the cage comprises a fibrous material, for example carbon fiber or glass fiber. In some embodiments the fibrous material has a gas transport channel by virtue of being a porous fibrous material, for example a woven or non-woven mesh. In some embodiments, the cage comprises a structural ceramic such as silica, or a carbon-fiber composite.

In some embodiments, the encapsulated pebble comprises a ceramic shell. The ceramic shell may be a layer intermediate the fuel core and the cage. In some embodiments, the ceramic shell encloses the fuel core. In some embodiments, the ceramic shell is disposed on and in direct contact with the fuel core.

In some embodiments, the encapsulated pebble comprises a ceramic insert disposed within the at least one gas transport channel. In some embodiments, the encapsulated pebble comprises a plurality of gas transport channels, each with a ceramic insert disposed therein.

The ceramic is porous, for example gas-permeable, thereby allowing transport of gas (tritium, helium) from the fuel core out of the pebble to the rest of the breeding blanket. In some embodiments, the ceramic is gas-permeable, but impermeable to liquid, thus enabling confinement of a molten salt within the fuel core.

The ceramic is gas-permeable, meaning that it has a pore size that will permit permeation of tritium and/or helium from the core, through a ceramic shell to a void between the cage and the ceramic shell, or through a ceramic insert disposed in a channel in the cage, from where the gas can be transported through the cage. The pore size required for allowing gas permeation while preventing leakage of liquid tritium breeding material will depend on the operating temperature in the breeding blanket, and thus the pressure difference across the porous ceramic. Typically, the pore size will be less than 1 µm, for example less than 0.5 µm, for example less than 0.25 µm, for example less than 0.1 µm. Methods of controlling pore size or ceramics are known in the art, for example by the inclusion of sacrificial template materials and controlling sintering time and/or sintering temperature.

The ceramic may comprise a material selected for its inertness to a molten salt of the fuel core. The ceramic may comprise a material selected for its ability to withstand operating temperatures within a breeding blanket, where temperatures can easily reach in excess of 300 °C, and can be in excess of 900 °C. For example, the ceramic may comprise a material selected from silica, porous graphite, silicon carbide, zinc carbide, titanium carbide and mixtures thereof.

In these embodiments, the ceramic protects the rest of the breeder blanket from the corrosive nature of the molten core during operation but also protects the cage from the internal temperatures of the fuel core during operation, as cyclic thermal operations up to these temperatures can stress the metals and negatively impact on the usable lifetime of the cage through deformation and fatigue. The porous or gas-permeable nature of the ceramic also allows permeation of gaseous tritium and helium from the core to prevent internal pressure building up, while preventing escape of molten fuel. When present, the ceramic is protected from physical erosion or abrasion by the metallic cage.

In some embodiments, a gas pocket is provided in the encapsulated pebble. In some embodiments, the gas pocket is provided within a ceramic shell disposed within the cage. In some embodiments, the cage is provided with ceramic inserts and the gas pocket is provided within the cage. In some examples, the gas pocket comprises a coolant gas, which may the same coolant gas as is used in the breeding blanket, or it may be a different coolant gas. In some examples, the coolant gas comprises nitrogen gas, helium gas, krypton gas, xenon gas. Providing a volume of coolant gas within the encapsulated fuel pebble allows for pressure changes within the fuel core to be accommodated, and provides a location within the pebble to which helium and molecular tritium can desorb or degas prior to permeating from the fuel core.

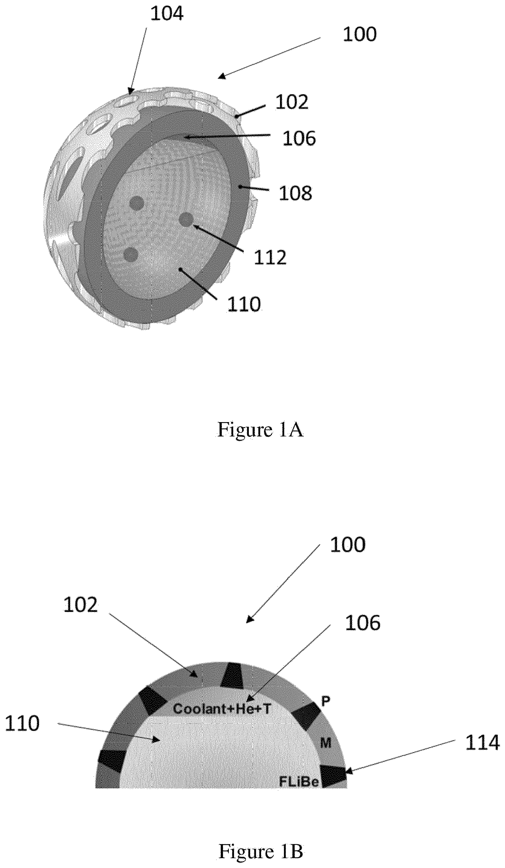

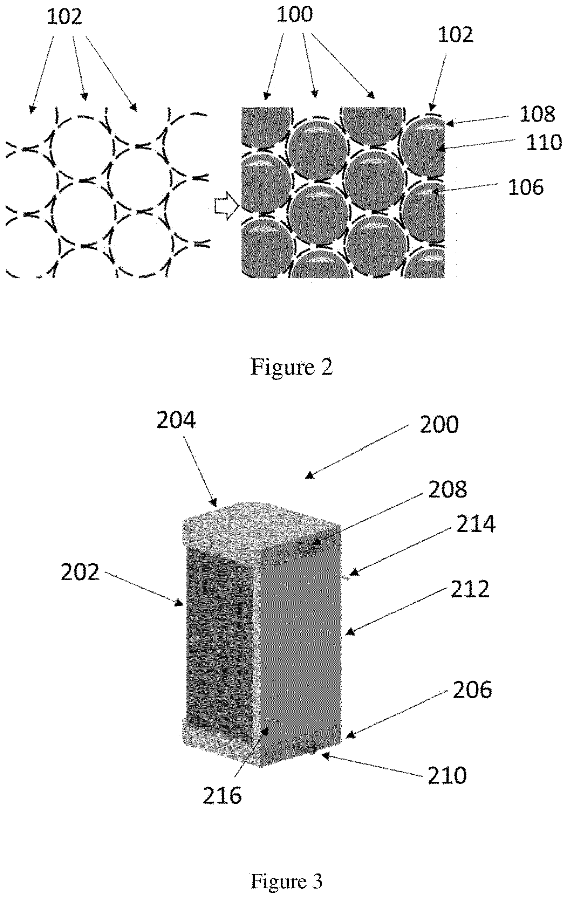

Examples of encapsulated pebbles are provided in Figures 1A and 1B. The examples show particular embodiments, such as for example the use of a metallic cage, but it will be understood that these are by way of example only and other configurations and materials are possible. Figure 1A shows the structure of an encapsulated pebble 100 comprising a metallic cage 102 as the outermost shell, a ceramic shell 108 within metallic cage 102 and a fuel core 110 within ceramic shell 108. Metallic cage 102 is provided with a plurality of holes or gas transport channels 104 that allow flow of gas in both directions. As described above, gas transport channels 104 permit flow of helium and tritium generated within fuel core 110 to exit encapsulated fuel pebble 100. Although not depicted clearly in Figure 1A (but shown in Figure 2 which is described below), the internal radius of metallic cage 102 is larger than the external radius of ceramic shell 108, thereby providing clearance between metallic cage 102 and ceramic shell 108. This clearance means that coolant gas can enter into the space between metallic cage 102 and ceramic shell 108 and directly cool ceramic shell 108, increasing the efficiency of the cooling process. Within ceramic shell 108, a fuel core 110 is provided. Fuel core 110 may comprise a lithium salt, such as FLiBe described above. Neutrons escaping the plasma from the fusion reactor react with the lithium, breeding the tritium. A pocket of coolant gas 106 is provided within ceramic shell 108, to which molecular tritium and helium can desorb from fuel core 110 prior to permeating through porous ceramic shell 108 and exiting encapsulated fuel pebble 100 via gas transport channels 104. In order to control the redox reactions within fuel core 110 and minimize the amount of corrosive tritium fluoride produced, seeds of redox material 112 such as metallic beryllium have also been included in fuel core 110.

Figure 1B shows the structure of an alternative encapsulated pebble 100. Pebble 100 of Figure 1B has the same metallic cage 102 as pebble 100 of Figure 1A, but has ceramic inserts 114 in place of ceramic shell 108. Ceramic inserts 114 are inserted into the gas transport channels (not numbered) of metallic cage 102, thereby providing a gas-permeable but molten salt-impermeable path for tritium and helium to exit encapsulated pebble 100. As with the pebble of Figure 1A, gas pocket 106 is provided, this time within metallic cage 102, initially filled with coolant gas but to which tritium and helium can desorb during operation. Although not shown, seeds of redox material would also be included within fuel core 110, to prevent formation of corrosive materials that would otherwise degrade metallic cage 102.

Figure 2 shows schematics of a plurality of encapsulated pebbles packed together, for example as when present in a pebble bed of a breeding blanket module as described herein. The left hand part of Figure 2 demonstrates one example in which metallic cages 102 (in the absence of any internal components of the encapsulated pebble) can be packed together. Each metallic cage 102 is provided with a plurality of gas transport channels, in fluid communication with the voids between the metallic cages 102 and with gas transport channels of other metallic cages 102. Thus, when present in a pebble bed, the body of metallic cages 102 provide a mesh network through which coolant gas can flow. The right-hand part of Figure 2A shows a packed bed of encapsulated pebbles 100 based on the same packing of metallic cages 102 as shown in the left-hand part of the Figure. As can be seen, the external dimensions of ceramic shells 108 are less than the internal dimensions of metallic cages 102, thus providing a flow path for coolant gas between the two. To complete the encapsulated pebble, ceramic shells 108 are provided with fuel core 110 and gas pocket 106, as described above.

### Method of forming an encapsulated pebble

Also described herein is a method of forming an encapsulated pebble. The encapsulated pebble may be as described above.

Various methods of forming the various components of an encapsulated pebble are possible, as will be appreciated by those skilled in the art.

For example, methods of forming small, hollow, metallic spheres on sacrificial supports such as polystyrene are known (https://www.hollomet.com/en/home.html), in which the support is held in a fluidized bed and a suspension of metal powder with binder (for example water) is sprayed onto the surface of the support in a spray deposition method. Heat treatment can burn off the sacrificial support and binder, leaving the green body of a hollow metal sphere which can then be sintered under controlled conditions to form the metallic cage with defined porosity. Laser drilling can then form an opening in the cage through which a fuel can be inserted, following by welding to seal the opening. The at least one gas transport channel through the metallic cage can be formed by laser drilling, for example. Laser drilling techniques are capable of accurately providing holes down to 0.5 µm in diameter, for example.

In an alternative process, metallic hemispheres may be formed over sacrificial supports as above. After the sacrificial support and organic binder have been burned off, and the metallic hemispheres sintered, a fuel core can be arranged in a first hemisphere, which will form a first part of the metallic cage, and a second part of the metallic cage in the form of a second hemisphere can be joined to the first hemisphere so as to encapsulate the fuel core. The two hemispheres can be joined by welding, for example, so as to encapsulate the fuel core.

Hollow ceramic spheres or hemispheres can also be formed on sacrificial supports as described above (https://www.hollomet.com/en/home.html). In the embodiment in which a gas pocket is provided within a ceramic shell, a sacrificial support of the same dimensions as the gas pocket can be used in combination with a molded fuel core as the template for ceramic deposition, with the sacrificial support being later burned off. The ceramic green bodies can then be sintered under controlled conditions to produce the ceramic shell having a defined porosity. Control of pore size in ceramics is known in the art: see, for example Isobe et al., Pore size control of Al2O3 ceramics using two-step sintering, Ceramics International (2012), Vol 38(1), 787-793 which describes controlling pore size formation to provide average pore sizes as low as 22 nm, and methods of determining pore size. In one embodiment, the ceramic shell is formed around the fuel core by forming two ceramic hemispheres, arranging a fuel core in one of the ceramic hemispheres and joining the two hemispheres together to encapsulate the fuel core. The two hemispheres may be joined by providing a band, for example a metallic band around the two hemispheres and clamping together the two hemispheres.

### Breeding blanket module for a fusion reactor

Also described herein is a breeding blanket module for a fusion reactor, comprising: a plurality of pebble beds connected in series and/or in parallel; and a plurality of encapsulated pebbles within each pebble bed. At least one, but in some examples all, of the plurality of encapsulated pebbles are pebbles with a fusion fuel core as described herein. In some examples, the pebble beds may be referred to as fuel beds as the tritium fuel for the reactor is generated within the beds.

The pebble beds may be arranged parallel to one another in an array of beds. In some examples, each pebble bed of the plurality of pebble beds is in fluid communication with a gas inlet and a gas outlet via a gas inlet manifold and a gas outlet manifold respectively. The gas inlet manifold may be connected to a source of coolant gas, for example a source of nitrogen gas, helium gas or krypton gas. The flow of coolant gas through the pebble beds serves two purposes, namely to provide cooling to the encapsulated pebbles and also to extract the generated tritium. The gas outlet manifold may be configured to recycle the tritium into the plasma of a fusion reactor as fuel.

In some examples, one or both of the gas inlet manifold and gas outlet manifold is provided with a plenum, configured to receive and allow accumulation of any breeder material that leaks from the encapsulated fuel pebbles to avoid any impact on the performance of the breeding unit.

In some embodiments, each pebble bed is an elongate bed. Each bed may be cylindrical, which enables efficient packing of encapsulated pebbles. However, other configurations are envisaged. In one embodiment, the pebble bed comprises a honeycomb structure in which each bed shares at least one wall with an adjacent bed. Regardless of the geometrical shape of the beds, each bed may have a first end and a second end, and in one embodiment the gas inlet manifold is configured to engage with the first end and the gas outlet manifold is configured to engage with the second end so that the plurality of beds are connected in parallel.

In some embodiments, the gas inlet manifold and gas outlet manifold are configured to define one or more flow paths through the plurality of beds. For example, each bed of the plurality of beds is provided in one of at least two groups of beds, which may be defined based on the flow path defined by the manifold configurations. A first group of the at least two groups may define a first gas flow path from the gas inlet through at least one bed of the first group to the gas outlet, and a second group of the at least two groups defines a second gas flow path from the gas inlet through at least one bed of the second group to the gas outlet. The first gas flow path and second gas flow path may be connected in parallel from the gas inlet to the gas outlet, although it will be understood that at any moment of operation, gas flow in one bed may be flowing counter current to the gas flow in an adjacent or non-adjacent bed. However, within each group of beds, each bed is connected in series with at least one other bed. That is, coolant gas flows out of, for example, the bottom or first end of one bed and back into the bottom or second end of the next bed. The number of groups of beds can be selected based on the total number of beds and the optimal flow path or flow paths of coolant gas to provide the required cooling to the encapsulated pebbles. In one embodiment, the manifolds are configured to direct coolant gas on one or more flow paths that begin with the beds closest to the plasma, to provide maximum cooling to those beds that need it most, before continuing to the beds spaced from the front (plasma side) of the breeding blanket module.

The plurality of fuel beds may be elongate beds, each having one or more walls to define an internal volume to receive the encapsulated pebbles. The wall or walls of the beds may be formed from any material suitable for use in a breeding blanket for a fusion reactor, for example a reduced activation ferritic martensitic steel such as described above in connection with the cage of the encapsulated pebble.

In some embodiments, and to maximise tritium extraction processes, the plurality of beds are provided with a tritium permeation barrier coating, for example a coating of chromia (Cr₂O₃) or alumina (Al₂O₃). This ensures that tritium flows from the beds through the gas outlet manifold at which point it can be extracted and sent to the reactor plasma.

In some embodiments, the plurality of beds are spaced from one another with voids provided therebetween. A neutron multiplier material, for example lead sulfide, can be provided in the voids between adjacent beds. Neutron multiplier materials in breeding blankets are known, and can be used to enhance the tritium breeding ratio of the breeding material. It will therefore be understood that other neutron multiplier materials may be used, for example Zr₅Pb₄, pure beryllium or Be₁₂Ti. In some embodiments, the neutron multiplier material is provided in the form of a plurality of pebbles in a pebble bed, or a bed of compressed powder, between the coolant pipes or beds.

In some embodiments, a neutron reflector panel is provided in the breeding blanket module. The neutron reflector panel may be provided at the back of the breeding beds, so that, in use, the beds are disposed between the reflector panel and a first wall. The use of a reflector panel may improve the neutron economy of the blanket and also generate more tritium, meaning that the total thickness of the blanket module can be reduced. In some embodiments, the neutron reflector panel comprises or is formed from a neutron reflector material, for example tungsten carbide or tungsten boride. In some embodiments, the neutron reflector panel comprises a steel casing, for example a EUROFER 97 steel casing, which is filled with a neutron reflector material, for example tungsten carbide or tungsten boride. In some embodiments, the neutron reflector panel is provided with cooling. In some embodiments, the neutron reflector panel is provided with an inlet and an outlet for supply of a coolant, for example a coolant gas such as those described herein or a liquid refrigerant.

In some embodiments, at least two of the encapsulated pebbles within the plurality of fuel beds comprise fuel cores that are the same compositions. In other embodiments, at least two of the encapsulated pebbles comprise cores that are different compositions. For example, in one embodiment at least two of the encapsulated pebbles comprise a Li₂·BeF₄ core, while in another embodiment at least one of the encapsulated fuel pebbles comprises a Li₂·BeF₄ and at least one of the encapsulated fuel pebbles comprises a core different to Li₂·BeF₄.

In some embodiments, the breeding blanket module is configured to engage with a first wall component of a fusion reactor. In some embodiments, the fusion reactor is a tokamak, for example a spherical tokamak. In some embodiments, the spherical tokamak may be a compact spherical tokamak. In some embodiments, the breeding blanket module is arranged such that, in use, in a fusion reactor such as a spherical tokamak, the fuel beds are oriented poloidally. In some embodiments, the plurality of fuel beds are arranged in an array, with a first row or bank of fuel beds being arranged adjacent to a first wall component of the fusion reactor with further rows or banks of fuel beds being arranged behind the first row or bank of fuel beds.

An example of a breeding blanket module is shown in Figure 3. Breeding blanket module 200 comprises a plurality of pebble beds 202 in the form of a plurality of elongate, cylindrical units. Each pebble bed, which may also be referred to as a breeding unit, is provided with a plurality of encapsulated fel pebbles, for example such as those described herein. However, it will be appreciated that other pebbles capable of breeding tritium in a fusion process could be used. Pebble beds 202 are joined and capped at their ends, by manifolds 204 and 206. Manifolds 204 and 206 and provided with gas inlet 208 and gas outlet 210 respectively, though it is noted that the direction of gas flow is arbitrary and could be reversed meaning that feature 210 could be used as a gas inlet and feature 208 could be used as a gas outlet. Reflector panel 212, comprising neutron reflecting material, is provided at the back end (in use) of breeding blanket module 200, and is provided with separate connectors 214 and 216 for coolant flow. It will be understood that other components of breeding blanket module 200, such as supports, and means for attaching it to other components of the reactor are not shown. In particular, breeding blanket module 200 may be provided with an outer casing or wall, to allow back-filling of a bed of neutron multiplier material between adjacent beds 202, and between beds 202 and the outer casing or wall. Breeding blanket module 200 may be configured to join, interact or engage with a first wall component of the fusion reactor.

### Method of operating the breeding blanket module and uses

Also described herein is a method of operating a breeding blanket module as described, comprising: providing a flow of coolant gas to the breeding blanket module; allowing the coolant gas to extract heat and tritium from the breed blanket module providing a warmed gas enriched with tritium; removing the warmed gas from the breeding blanket module; and extracting the tritium from the warmed gas. The breeding blanket module maybe present in a fusion reactor and may be heated by the reactor. The coolant gas may comprise one or more coolant gas selected from nitrogen, helium, and carbon dioxide.

There is also described a fusion reactor comprising an encapsulated pebble with a fusion fuel core and/or a breeding blanket module as described herein, along with the use of an encapsulated pebble as described herein in a fusion reactor or a fission reactor, and a use of a breeding blanket module as described herein in a fusion reactor. The fusion reactor may be a tokamak reactor, for example a spherical tokamak reactor.

Modelling studies of the encapsulated pebbles, and of the breeding blanket module containing the encapsulated pebbles, demonstrate the feasibility and workability of the pebbles and breeding blanket in fusion reactors.

## Claims

1. An encapsulated pebble (100), comprising:
a nuclear fission fuel core (110) or a nuclear fusion fuel core (110); and
a cage (102) encapsulating the fuel core (110), wherein the cage (102) comprises at least one gas transport channel (104) therethrough and the internal diameter of the cage (102) is larger than the external diameter of the fuel core (110);
**characterized by**
a ceramic shell (108) contained within the cage (102) and surrounding the fuel core (110); or
a ceramic insert (114) provided in the at least one gas transport channel (104),
wherein the ceramic shell (108) or the ceramic insert (114) comprises a gas-permeable ceramic.

2. The encapsulated pebble (100) of claim 1,
wherein the a gas-permeable ceramic is selected from a gas-permeable silica, a gas-permeable graphite or a gas-permeable silicon carbide, each having a pore radius of less than 0.25 µm.

3. The encapsulated pebble (100) of claim 1 or claim 2, wherein the internal diameter of the cage (102) is larger than the external diameter of a ceramic shell (108) contained within the cage (102).

4. The encapsulated pebble (100) of any one of the preceding claims, wherein the fuel core (110) comprises:
a molten salt that is liquid above about 300 °C; or
a lithium salt, for example Li₂·BeF₄; or
a redox controlling material (112) comprising metallic beryllium.

5. The encapsulated pebble (100) of any one of the preceding claims, wherein a gas pocket (106) is provided in the encapsulated pebble (100); optionally:
wherein a coolant gas selected from nitrogen and helium is provided in the gas pocket (106).

6. The encapsulated pebble (100) of any one of the preceding claims, wherein the cage (102) comprises a metallic alloy, for example a reduced activation ferritic martensitic steel.

7. A method of forming an encapsulated pebble (100), comprising:
encapsulating a nuclear fission fuel core (110) or a nuclear fusion fuel core (110) within a cage (102), wherein the cage (102) comprises at least one gas transport channel (104) therethrough and the internal diameter of the cage (102) is larger than the external diameter of the fuel core (110), the method comprising forming a gas-permeable ceramic shell (108) around the fission fuel core (110) or the fusion fuel core (110) and encapsulating the formed ceramic shell (108) within the cage (102), or inserting a gas-permeable ceramic insert (114) into the at least one gas transport channel (104).

8. The method of claim 7, comprising:
(i) arranging the fuel core (110) in a first part of the cage (102); joining a second part of a cage (102) to the first part so as to encapsulate the fuel core (110); or
(ii) forming the cage (102);
forming an opening in the cage (102);
inserting a fuel through the opening so as to form a fuel core (110) within the cage (102);
sealing the opening so as to encapsulate the fuel core (110); and
inserting the gas-permeable ceramic insert (114) into the at least one gas transport channel (104).

9. The method of any one of claims 7 to 8, comprising forming the at least one gas transport channel (104) by laser drilling the cage (102) or by controlling porosity of the cage (102) during a sintering process of forming the cage (102).

10. A breeding blanket module for a fusion reactor, comprising:
a plurality of pebble beds connected in series and/or in parallel; and
a plurality of encapsulated pebbles within each pebble bed, wherein at least one encapsulated pebble of the plurality of encapsulated pebbles is an encapsulated pebble comprising a fusion fuel core as defined in any one of claims 1 to 6.

11. The breeding blanket module of claim 10, wherein each pebble bed of the plurality of pebble beds is in fluid communication with a gas inlet and a gas outlet via a gas inlet manifold and a gas outlet manifold respectively, wherein each pebble bed is an elongate pebble bed having a first end and a second end, and wherein the gas inlet manifold is configured to engage with the first end and the gas outlet manifold is configured to engage with the second end.

12. The breeding blanket module of any one of claims 10 or 11, wherein each pebble bed of the plurality of pebble beds is provided in one of at least two groups of pebble beds;
wherein a first group of the at least two groups defines a first gas flow path from the gas inlet through at least one pebble bed of the first group to the gas outlet, and a second group of the at least two groups defines a second gas flow path from the gas inlet through at least one fuel bed of the second group to the gas outlet,
wherein the first gas flow path and second gas flow path are connected in parallel from the gas inlet to the gas outlet or wherein
each pebble bed in each group of pebble beds is connected in series with at least one other pebble bed in the same group of pebble beds.

13. The breeding blanket module of any one of claims 10 to 12, wherein:
lead sulfide is provided in the voids between adjacent pebble beds; or
the breeding blanket module comprises a neutron reflector panel comprising tungsten carbide; or
the breeding blanket module is arranged such that, in use, in a fusion reactor, the pebble beds are oriented poloidally; or
the plurality of fuel beds form a honeycomb structure wherein each pebble bed of the plurality of pebble beds shares at least one wall with an adjacent pebble bed; or
the plurality of pebble beds comprise reduced activation ferritic martensitic steel walls, provided with a tritium permeation barrier coating comprising a coating of chromia (Cr₂O₃) or alumina (Al₂O₃).

14. A method of operating the breeding blanket module of any one of claims 11 to 13, comprising:
providing a flow of coolant gas to the breeding blanket module;
allowing the coolant gas to extract heat and tritium from the breeding blanket module providing a warmed gas enriched with tritium;
removing the warmed gas from the breeding blanket module; and
extracting the tritium from the warmed gas;
optionally wherein the breeding blanket is present in a fusion reactor and is heated by the tritium breeding reaction in the encapsulated pebble and/or by the plasma in the reactor core, and/or wherein the coolant gas comprises one or more coolant gas selected from nitrogen, helium, and carbon dioxide.

15. A fusion reactor comprising an encapsulated pebble (100) comprising a fusion fuel core according to any one of claims 1 to 6.

## Patentansprüche

1. Verkapselte Kugel (100), umfassend:
einen Kernspaltungsbrennstoffkern (110) oder einen Kernfusionsbrennstoffkern (110); und
einen den Brennstoffkern (110) verkapselnden Käfig (102), wobei der Käfig (102) mindestens einen Gastransportkanal (104) dort hindurch umfasst und der Innendurchmesser des Käfigs (102) größer ist als der Außendurchmesser des Brennstoffkerns (110) ;
**gekennzeichnet durch**
eine Keramikschale (108), die innerhalb des Käfigs (102) enthalten ist und den Brennstoffkern (110) umgibt; oder
einen Keramikeinsatz (114), der in dem mindestens einen Gastransportkanal (104) bereitgestellt ist, wobei die Keramikschale (108) oder der Keramikeinsatz (114) eine gasdurchlässige Keramik umfasst.

2. Verkapselte Kugel (100) nach Anspruch 1,
wobei die gasdurchlässige Keramik ausgewählt ist aus einem gasdurchlässigen Siliciumdioxid, einem gasdurchlässigen Graphit oder einem gasdurchlässigen Siliciumcarbid, die jeweils einen Porenradius von weniger als 0,25 µm aufweisen.

3. Verkapselte Kugel (100) nach Anspruch 1 oder Anspruch 2, wobei der Innendurchmesser des Käfigs (102) größer ist als der Außendurchmesser einer Keramikschale (108), die innerhalb des Käfigs (102) enthalten ist.

4. Verkapselte Kugel (100) nach einem der vorhergehenden Ansprüche, wobei der Brennstoffkern (110) umfasst:
ein geschmolzenes Salz, das oberhalb von etwa 300 °C flüssig ist; oder
ein Lithiumsalz, zum Beispiel Li₂BeF₄; oder
ein Redox-Kontrollmaterial (112), das metallisches Beryllium umfasst.

5. Verkapselte Kugel (100) nach einem der vorhergehenden Ansprüche, wobei eine Gasblase (106) in der verkapselten Kugel (100) bereitgestellt ist; optional:
wobei in der Gasblase (106) ein Kühlmittelgas, ausgewählt aus Stickstoff und Helium, bereitgestellt ist.

6. Verkapselte Kugel (100) nach einem der vorhergehenden Ansprüche, wobei der Käfig (102) eine metallische Legierung umfasst, zum Beispiel einen ferritischen martensitischen Stahl mit reduzierter Aktivierung.

7. Verfahren zum Bilden einer verkapselten Kugel (100), umfassend:
Verkapseln eines Kernspaltungsbrennstoffkerns (110) oder eines Kernfusionsbrennstoffkerns (110) innerhalb eines Käfigs (102), wobei der Käfig (102) mindestens einen Gastransportkanal (104) dort hindurch umfasst und der Innendurchmesser des Käfigs (102) größer ist als der Außendurchmesser des Brennstoffkerns (110), wobei das Verfahren das Bilden einer gasdurchlässigen Keramikschale (108) um den Kernspaltungsbrennstoff (110) oder den Kernfusionsbrennstoff (110) herum und das Verkapseln der gebildeten Keramikschale (108) innerhalb des Käfigs (102) oder das Einsetzen eines gasdurchlässigen Keramikeinsatzes (114) in den mindestens einen Gastransportkanal (104) umfasst.

8. Verfahren nach Anspruch 7, umfassend:
(i) Anordnen des Brennstoffkerns (110) in einem ersten Teil des Käfigs (102);
Aneinanderfügen eines zweiten Teils eines Käfigs (102) mit dem ersten Teil, um den Brennstoffkern (110) zu verkapseln; oder
(ii) Bilden des Käfigs (102);
Bilden einer Öffnung in dem Käfig (102);
Einsetzen eines Brennstoffs durch die Öffnung hindurch, um einen Brennstoffkern (110) innerhalb des Käfigs (102) zu bilden;
Abdichten der Öffnung, um den Brennstoffkern (110) zu verkapseln; und
Einsetzen des gasdurchlässigen Keramikeinsatzes (114) in den mindestens einen Gastransportkanal (104).

9. Verfahren nach einem der Ansprüche 7 bis 8, umfassend das Bilden des mindestens einen Gastransportkanals (104) durch Laserbohren des Käfigs (102) oder durch Kontrollieren der Porosität des Käfigs (102) im Laufe eines Sinterprozesses des Bildens des Käfigs (102).

10. Brutmantelmodul für einen Fusionsreaktor, umfassend:
eine Vielzahl von in Reihe und/oder parallel verbundene Kugelhaufen; und
eine Vielzahl von verkapselten Kugeln innerhalb jedes Kugelhaufens, wobei mindestens eine verkapselte Kugel der Vielzahl von verkapselten Kugeln eine verkapselte Kugel ist, die einen Fusionsbrennstoffkern umfasst, wie in einem der Ansprüche 1 bis 6 definiert.

11. Brutmantelmodul nach Anspruch 10, wobei jeder Kugelhaufen der Vielzahl von Kugelhaufen mittels jeweils eines Gaseinlassverteilers und eines Gasauslassverteilers mit einem Gaseinlass und einem Gasauslass in Fluidverbindung vorliegt, wobei jeder Kugelhaufen ein länglicher Kugelhaufen mit einem ersten Ende und einem zweiten Ende ist, und wobei der Gaseinlassverteiler konfiguriert ist, um mit dem ersten Ende in Eingriff zu kommen und der Gasauslassverteiler konfiguriert ist, um mit dem zweiten Ende in Eingriff zu kommen.

12. Brutmantelmodul nach einem der Ansprüche 10 oder 11, wobei jeder Kugelhaufen der Vielzahl von Kugelhaufen in einer von mindestens zwei Gruppen von Kugelhaufen bereitgestellt ist;
wobei eine erste Gruppe der mindestens zwei Gruppen einen ersten Gasströmungsweg von dem Gaseinlass durch mindestens ein Kugelhaufen der ersten Gruppe zu dem Gasauslass hindurch definiert, und eine zweite Gruppe der mindestens zwei Gruppen einen zweiten Gasströmungsweg von dem Gaseinlass durch mindestens einen Brennstoffhaufen der zweiten Gruppe zu dem Gasauslass hindurch definiert,
wobei der erste Gasströmungsweg und zweite Gasströmungsweg von dem Gaseinlass zu dem Gasauslass parallel verbunden sind oder wobei jeder Kugelhaufen in jeder Gruppe von Kugelhaufen mit mindestens einem weiteren Kugelhaufen in der gleichen Gruppe von Kugelhaufen in Reihe verbunden ist.

13. Brutmantelmodul nach einem der Ansprüche 10 bis 12, wobei:
Bleisulfid in den Hohlräumen zwischen benachbarten Kugelhaufen bereitgestellt ist; oder
das Brutmantelmodul eine Neutronenreflektorplatte umfasst, die Wolframcarbid umfasst; oder
das Brutmantelmodul derart angeordnet ist, dass bei der Verwendung in einem Fusionsreaktor die Kugelhaufen poloid orientiert sind; oder
die Vielzahl von Brennstoffhaufen eine Wabenstruktur bilden, wobei jeder Kugelhaufen der Vielzahl von Kugelhaufen mindestens eine Wand mit einem benachbarten Kugelhaufen teilt; oder
die Vielzahl von Kugelhaufen ferritische martensitische Stahlwände mit reduzierter Aktivierung umfassen, die mit einer Tritiumpermeationsbarrierebeschichtung bereitgestellt sind, die eine Beschichtung aus Chromoxid (Cr₂O₃) oder Aluminiumoxid (Al₂O₃) umfasst.

14. Verfahren zum Betreiben des Brutmantelmoduls nach einem der Ansprüche 11 bis 13, umfassend:
Bereitstellen eines Stroms von Kühlmittelgas zu dem Brutmantelmodul;
dem Kühlmittelgas erlauben, Wärme und Tritium aus dem Brutmantelmodul zu extrahieren, wodurch ein mit Tritium angereichertes erwärmtes Gas bereitgestellt wird;
Entfernen des erwärmten Gases aus dem Brutmantelmodul; und
Extrahieren des Tritiums aus dem erwärmten Gas;
wobei optional der Brutmantel in einem Fusionsreaktor vorhanden ist und durch die Tritiumbrutreaktion in der verkapselten Kugel und/oder durch das Plasma in dem Reaktorkern erwärmt wird, und/oder wobei das Kühlmittelgas ein oder mehrere Kühlmittelgase, ausgewählt aus Stickstoff, Helium und Kohlendioxid, umfasst.

15. Fusionsreaktor, umfassend eine verkapselte Kugel (100), umfassend einen Fusionsbrennstoffkern nach einem der Ansprüche 1 bis 6.

## Revendications

1. Boulet encapsulé (100), comprenant :
un noyau de combustible de fission nucléaire (110) ou un noyau de combustible de fusion nucléaire (110) ; et
une cage (102) encapsulant le noyau de combustible (110), dans lequel la cage (102) comprend au moins un canal de transport de gaz (104) à travers elle et le diamètre interne de la cage (102) est plus grand que le diamètre externe du noyau de combustible (110) ;
**caractérisé par**
une coque en céramique (108) contenue dans la cage (102) et entourant le noyau de combustible (110) ; ou
un insert en céramique (114) prévu dans l'au moins un canal de transport de gaz (104),
dans lequel la coque en céramique (108) ou l'insert en céramique (114) comprend une céramique perméable aux gaz.

2. Boulet encapsulé (100) selon la revendication 1,
dans lequel la céramique perméable aux gaz est choisie parmi une silice perméable aux gaz, un graphite perméable aux gaz ou un carbure de silicium perméable aux gaz, chacun ayant un rayon de pores inférieur à 0,25 µm.

3. Boulet encapsulé (100) selon la revendication 1 ou la revendication 2, dans lequel le diamètre interne de la cage (102) est plus grand que le diamètre externe d'une coque en céramique (108) contenue dans la cage (102).

4. Boulet encapsulé (100) selon l'une quelconque des revendications précédentes, dans lequel le noyau de combustible (110) comprend :
un sel fondu qui est liquide au-dessus d'environ 300 °C ; ou
un sel de lithium, par exemple Li₂·BeF₄ ; ou
un matériau de contrôle redox (112) comprenant du béryllium métallique.

5. Boulet encapsulé (100) selon l'une quelconque des revendications précédentes, dans lequel une poche de gaz (106) est prévue dans le boulet encapsulé (100) ; éventuellement :
dans lequel un gaz de refroidissement choisi parmi l'azote et l'hélium est prévu dans la poche de gaz (106).

6. Boulet encapsulé (100) selon l'une quelconque des revendications précédentes, dans lequel la cage (102) comprend un alliage métallique, par exemple un acier martensitique ferritique à activation réduite.

7. Procédé de formation d'un boulet encapsulé (100), comprenant :
l'encapsulation d'un noyau de combustible de fission nucléaire (110) ou d'un noyau de combustible de fusion nucléaire (110) dans une cage (102), dans lequel la cage (102) comprend au moins un canal de transport de gaz (104) à travers elle et le diamètre interne de la cage (102) est plus grand que le diamètre externe du noyau de combustible (110), le procédé comprenant la formation d'une coque en céramique perméable aux gaz (108) autour du noyau de combustible de fission (110) ou du noyau de combustible de fusion (110) et l'encapsulation de la coque en céramique formée (108) dans la cage (102), ou l'insertion d'un insert en céramique perméable aux gaz (114) dans l'au moins un canal de transport de gaz (104).

8. Procédé selon la revendication 7, comprenant :
(i) la disposition du noyau de combustible (110) dans une première partie de la cage (102) ;
le fait de joindre une seconde partie d'une cage (102) à la première partie de manière à encapsuler le noyau de combustible (110) ; ou
(ii) la formation de la cage (102) ;
la formation d'une ouverture dans la cage (102) ;
l'insertion d'un combustible à travers l'ouverture de manière à former un noyau de combustible (110) à l'intérieur de la cage (102) ;
le fait de sceller l'ouverture de manière à encapsuler le noyau de combustible (110) ; et
l'insertion de l'insert en céramique perméable aux gaz (114) dans l'au moins un canal de transport de gaz (104).

9. Procédé selon l'une quelconque des revendications 7 à 8, comprenant la formation de l'au moins un canal de transport de gaz (104) par perçage au laser de la cage (102) ou par contrôle de la porosité de la cage (102) pendant un processus de frittage de formation de la cage (102).

10. Module de couverture de génération pour réacteur à fusion, comprenant :
une pluralité de lits de boulets connectés en série et/ou en parallèle ; et
une pluralité de boulets encapsulés à l'intérieur de chaque lit de boulets, dans lequel au moins un boulet encapsulé de la pluralité de boulets encapsulés est un boulet encapsulé comprenant un noyau de combustible de fusion selon l'une quelconque des revendications 1 à 6.

11. Module de couverture de génération selon la revendication 10, dans lequel chaque lit de boulets de la pluralité de lits de boulets est en communication fluidique avec une entrée de gaz et une sortie de gaz par l'intermédiaire d'un collecteur d'entrée de gaz et d'un collecteur de sortie de gaz respectivement, dans lequel chaque lit de boulets est un lit de boulets allongé ayant une première extrémité et une seconde extrémité, et dans lequel le collecteur d'entrée de gaz est configuré pour venir en prise avec la première extrémité et le collecteur de sortie de gaz est configuré pour venir en prise avec la seconde extrémité.

12. Module de couverture de génération selon l'une quelconque des revendications 10 ou 11, dans lequel chaque lit de boulets de la pluralité de lits de boulets est disposé dans l'un d'au moins deux groupes de lits de boulets ;
dans lequel un premier groupe des au moins deux groupes définit un premier trajet d'écoulement de gaz depuis l'entrée de gaz à travers au moins un lit de boulets du premier groupe jusqu'à la sortie de gaz, et un second groupe des au moins deux groupes définit un second trajet d'écoulement de gaz depuis l'entrée de gaz à travers au moins un lit de combustible du second groupe jusqu'à la sortie de gaz,
dans lequel le premier trajet d'écoulement de gaz et le second trajet d'écoulement de gaz sont connectés en parallèle de l'entrée de gaz à la sortie de gaz ou dans lequel chaque lit de boulets dans chaque groupe de lits de boulets est connecté en série avec au moins un autre lit de boulets dans le même groupe de lits de boulets.

13. Module de couverture de génération selon l'une quelconque des revendications 10 à 12, dans lequel :
du sulfure de plomb est prévu dans les vides entre les lits de boulets adjacents ; ou
le module de couverture de génération comprend un panneau réflecteur de neutrons comprenant du carbure de tungstène ; ou le module de couverture de génération est disposé de telle sorte que, lors de l'utilisation, dans un réacteur à fusion, les lits de boulets sont orientés de manière poloïdale ; ou
la pluralité de lits de combustible forment une structure en nid d'abeilles dans lequel chaque lit de boulets de la pluralité de lits de boulets partage au moins une paroi avec un lit de boulets adjacent ; ou
la pluralité de lits de boulets comprennent des parois en acier martensitique ferritique à activation réduite, dotées d'un revêtement barrière de perméation au tritium comprenant un revêtement de chromine (Cr₂O₃) ou d'alumine (Al₂O₃).

14. Procédé de fonctionnement du module de couverture de génération selon l'une quelconque des revendications 11 à 13, comprenant :
la fourniture d'un flux de gaz de refroidissement au module de couverture de génération ;
le fait de permettre au gaz de refroidissement d'extraire la chaleur et le tritium du module de couverture de génération, fournissant ainsi un gaz réchauffé enrichi en tritium ;
le retrait du gaz réchauffé du module de couverture de génération ; et
l'extraction du tritium du gaz réchauffé ;
éventuellement dans lequel la couverture de génération est présente dans un réacteur à fusion et est chauffée par la réaction de génération de tritium dans le boulet encapsulé et/ou par le plasma dans le noyau de réacteur, et/ou dans lequel le gaz de refroidissement comprend un ou plusieurs gaz de refroidissement choisis parmi l'azote, l'hélium et le dioxyde de carbone.

15. Réacteur à fusion comprenant un boulet encapsulé (100) comprenant un noyau de combustible de fusion selon l'une quelconque des revendications 1 à 6.
